# EUROPÄISCHE PATENTSCHRIFT

(11) **EP 2 288 497 B1**
(45) Veröffentlichungstag und Bekanntmachung des Hinweises auf die Patenterteilung: **09.05.2018**
(21) Anmeldenummer: 08850003.8
(22) Anmeldetag: 12.11.2008
(51) Int. Cl.: B32B 9/04, C04B 37/00

(54) **STEINBLOCK AUS SCHICHTEN**
LAYERED STONE BLOCK
BLOC DE PIERRE CONSTITUÉ DE COUCHES

(30) Priorität: 14.11.2007 DE 202007015918 U
(43) Veröffentlichungstag der Anmeldung: 02.03.2011
(73) Patentinhaber: Kuse, Kolja, 81925 München (DE)
(72) Erfinder: Kuse, Kolja, 81925 München (DE)
(86) Internationale Anmeldenummer: PCT/EP2008/009573
(87) Internationale Veröffentlichungsnummer: WO 2009/062704

(56) Entgegenhaltungen:
- EP-A- 0 151 406
- CH-A5- 586 812

## Beschreibung

Die vorliegende Erfindung bezieht sich auf die Stabilisierung von Steingut im weiteren Sinn - das heißt Naturstein, Lavastein, Kunststein, Beton und sonstiges Steingut, sowie Keramik bis hin zu glashaltigen Substanzen, Glas oder unter anderem auch verflüssigtes Steinmaterial oder direkt aus flüssiger Magma gewonnenes Steinmaterial - welches sich besonders durch eine hohe Druckstabilität und Druckfestigkeit und geringe CO₂ - Emissionen bei der Herstellung auszeichnet. Kern der Erfindung ist das Schichten von beschichteten Natursteinplatten, die unter Vorspannung stehen, und das Verbinden der Steingutschichten durch Verwendung geeignete Harze in Verbindung mit zugfesten Materialien. Die Vorspannung der einzelnen Platten kann durch die Verwendung von schrumpfender Matrix bzw. Gewebematrix oder durch Biegen der Platten erzeugt werden. Dadurch wird das im folgenden Steingut genannte zu stabilisierende steinhaltige oder steinartige Material auf umweltfreundliche Weise so nachhaltig vorgespannt, dass eine möglichst hohe interne Flexibilität des Steingutes entsteht. Damit können interne Spannungen, die zum Beispiel durch lokale Erwärmung entstehen, in Blöcken gezielt aufgebaut, abgefangen und auch abgebaut werden. So entstehende Bauteile können nunmehr auch Stahl- und Aluminium-Bauteile ersetzen, die eine massive Blockform haben, die insbesondere wegen des hohen Energieaufwandes bei der Herstellung und wegen des Prozessbedingten CO₂-Ausstosses klimatische Nebenwirkungen haben. Diese inhärent CO₂-behafteten Materialien können nunmehr durch Stein-Materialien, deren Herstellung mit wesentlich weniger CO₂-Ausstoss einhergeht, ersetzt werden. Mit der hier vorgestellten Erfindung wird es möglich nicht nur dünne und flexible Plattenware aus Stein, sondern Blockware als Basismaterial für zum Beispiel den Motorenbau herzustellen. Bezüglich des zu verwendenden Steinguts sind besonders Natursteine wie Basalt und Granit, granitähnliche Gesteine wie Gneis, Marmor, Kalkstein und Schiefer, unter Umständen auch Beton, sowie hochfeste moderne Keramiken, Glaskeramik oder Glas zu erwähnen, sowie alle sonstigen Materialien aus Stein oder Keramik, natürlicher oder künstlich hergestellter Perlmutt und Korallenbaustoff, die heute gentechnisch herstellbar und hoch druckbelastbar sind und insbesondere dadurch gekennzeichnet sind, dass sie einen geringen Ausdehnungskoeffizienten besitzen, sowohl was die Temperatur-, als auch was die Druck- bzw. Zugdehnungskoeffizienten betrifft. Diese Materialien zeichnen sich zwar einerseits durch eine hohe Belastbarkeit bei Druckbeanspruchung aus, sind dagegen aber in unstabilisierter Form fast völlig instabil bei Zug- und Biegebelastung.
Deshalb müssen Sie mit einer Schicht oder Hülle aus Fasermaterial vorverstärkt werden, so wie zum Beispiel in der EP 106 20 92 beschrieben. Darüber hinaus sollten Sie aber auch für manche Anwendungen vorgespannt werden, um diese Vorspannung in das Innere eines Steinblockes zu bekommen, was zu einem wichtigen Element in der hier vorgelegten Erfindung wird.

Der Stand der Technik beschreibt bereits ähnliches Vorgehen, indem zum Beispiel zwei Schichten Stein - in diesem Fall Marmor - in der EP 0 151 406 verwendet werden, um ein Bettgestell oder Möbel aus Naturstein zu realisieren. Um die Steinplatten vor Bruch zu schützen wird eine Armierung mit einer Kunststoffplatte aus Fasermaterial zwischen zwei Steinschichten vorgeschlagen, jedoch ohne die hier vorgeschlagene Vorspannung, welche nötig ist, um das Material in Grenzen zerstörungsfrei zu biegen.
Aus einer älteren Patentschrift ist ersichtlich, dass bereits zuvor mehrschichtige Natursteinplatten beschrieben werden, welche mit speziellen Eigenschaften einer Armierung ausgestattet sind, die Glasfasern enthält. Nicht beschrieben ist, dass und ggfls. wie Vorspannung in den Verbund kommen soll. Die Erfindung beschreibt außerdem Faserschichten, welche nachgiebig sind oder sein sollen, was in der vorliegenden Erfindung gegenteilig argumentiert wird, da die Funktion der Vorspannung unter allen Umständen aufrecht zu erhalten ist.

Neu für die Stabilisierung von Steingut ist die Verwendung der Technik, das Schrumpfen von harzgetränktem Gewebeschichten, die gezielt beim Aushärten schrumpfen können, zu nutzen. Hierdurch entsteht beim Aushärten des Harzes eine natürliche Vorspannung im Steingut. Zusätzlich kann diese Vorspannung dadurch verstärkt werden, dass die Teile - einmal auf einer Seite vorgespannt - ohne Bruch in die andere Richtung gebogen werden, um dann auf der anderen Seite beschichtet und sodann mehrere dieser Schichten zu Blöcken zusammengesetzt zu werden. Das fertige ausgehärtete Bauteil ist nach diesem Prozess in x- und y-Richtung vorgespannt, und am Ende des Prozesses mit einer genau berechenbaren inneren Vorspannung versehen.
Als Faser für das Gewebe können Pflanzenfasern zum Einsatz kommen, die direkt aus pflanzlichen Grundstoffen gewonnen werden, andererseits kann es für Anwendungen,- die eine sehr zugstabile Stabilisierung des Steins notwendig machen, Sinn machen Carbonfasern, Aramidfasern oder carbonisierte pflanzliche Grundstoffe zu verwenden. Es auch möglich jede andere Art von zugstabilen Stabilisierungsschichten, wie z. B. dünne Metall-Folien, gelochte Metallfolien, Holzfurniere, Glasfasern, Steinfasern, Pflanzenfasern und zugstabile Gewebe für die Erzeugung der Stein-Vorspannung zu nutzen.

Zu diesem Zweck werden, auch unter zur Hilfenahme einer relativ neuen Methode - der Vorspannung von Steingut durch Biegung und/oder schrumpfende Harze - Platten-Bauteile zu Blöcken zusammengesetzt. Die einzelne Platte ist auf der Ausgangsbasis Stein gewonnen worden, wobei jede einzelne Platte auf der einen oder auf beiden Seiten durch eine wärme- oder hitzebeständige Matrix und Gewebe stabilisiert und vorgespannt ist. Hierbei sollten passend zu der jeweiligen Anwendung solche Fasern Verwendung finden, die eine Zugstabilität haben, die groß genug ist, um den Stein so vorzuspannen, dass er für die jeweilige Anwendung gegen inneres Reißen und innere Haarrisse geschützt ist. Wegen der Vorspannung ist es möglich in bestimmten Temperaturbereichen auch zugstabile Materialien zu nutzen, die einen Ausdehnungskoeffizienten besitzen, der größer als der des Steins ist. Selbst normale Glasfasern sind hierzu geeignet, was die Vorspannung extrem billig macht. Wie bereits in dem Patent EP 1062092 beschrieben, sind für Hochleistungsanwendungen Carbonfasern gut geeignet, da Sie einen geringen Ausdehnungskoeffizienten und geringe Zugdehnung, sowie eine extrem hohe Zugbelastbarkeit besitzen, und damit eine Vorspannung in weiteren thermischen Grenzen zulassen, als Glasfasern und andere Stabilisierungsschichten, die einen höheren Ausdehnungskoeffizienten, als der des Steins besitzen.

Die vorliegende Erfindung bedient sich auch auf die bei Naturstein entdeckte Eigenschaft durch Druck im Volumen änderbar zu sein. Dies ist eine wissenschaftlich gesehen neue Erkenntnis, die dazu führt, dass man den Stein biegen kann, ohne ihn zu zerstören und dass man den Stein auch punktuell innerhalb der drei Raumdimensionen erwärmen kann, ohne ihn dadurch zu zerstören, wenn er entsprechend mechanisch stabilisiert ist. Diese Eigenschaft ist Voraussetzung für den Kern dieser Erfindung.

Die vorliegende Erfindung schlägt einen umweltfreundlichen Weg vor, um BasisMaterial in Blockform für Bauteile zu erstellen, die das spezifische Gewicht haben von Aluminium - Granit hat ein spezifisches Gewicht zwischen 2.6 und 2.9 g/cm3, Aluminium hat 2.7 g/cm3 - Stein oder Keramiken als alternatives Material für die Herstellung von Bauteilen aller Art zu benutzen, die bisher typischerweise bisher nur aus Metall, Holz oder Kunststoff hergestellt werden konnten, und insbesondere die hohe Druckfestigkeit von geeigneten Natursteinen und Keramiken für allgemeinere industrielle Anwendungen auf preiswerte Weise in der Form nutzbar zu machen, dass sie nunmehr auch auf berechenbare Weise bezüglich er inneren Spannungen "engineerable" werden. Solche Blöcke haben außerdem einen hohen Wert des Verhältnis von Druckstabilität in Relation zum spezifischen Gewicht.

Naturstein entwickelt auf diese Weise stabilisiert unerreicht gute Dämpfungseigenschaften. Gelingt es auf umweltfreundliche Weise Stein vor Bruch zu schützen, hat man ein Material gewonnen, welches umweltfreundlich hergestellt werden kann und in der Regel in Summe noch bessere Materialeigenschaften aufweist als Stahl und Aluminium. Es wird zum Beispiel möglich sich-selbstdämpfende Motorblöcke zu bauen, wenn man das Material als Plattenware vorfertigt, Bohrungen und Löcher für Kanäle mit dem Wasserstrahl in die Platten vorschneidet und den Block anschließend schichtweise zusammenfügt. Um das zu erreichen ist es zwingend nötig, den Stein oder die Keramik nicht nur gegen Zug und damit verbundenen Bruch zu stabilisieren, sondern so weit vorzuspannen, dass die Streckgrenze des zu stabilisierenden Steins durch die spätere Wärmebelastung nie erreicht wird. Einen solchen Weg schlägt die Erfindung mit Hilfe der geeigneten Vorspannung der Platten und deren spätere Zusammensetzung zu ganzen Blöcken vor.

Die Erfindung basiert auf der Stabilisierung von Steingut durch ein flächig einseitig oder beidseitig auf Steinplatten aufgebrachtes Trägermaterial, welches vorzugsweise mit einem schrumpfenden Harz und Gewebe, vorzugsweise auf Epoxidharzbasis, auf der Steinoberfläche aufgebracht wird. Beim Aushärten des Harzes wird der Stein auf der Seite, auf der das Trägermaterial angebracht ist, auf natürliche Weise, oder zusätzlich durch "Rückbiegen" vorgespannt. Wird das Platten-Bauteil anschließend ganzumhüllend vom Trägermaterial wie ein Korsett umspannt, dann wird der Stein symmetrisch vorgespannt und liegt in ebener Plattenform vor. Diese Platten werden nun in ebener Form kraftschlüssig aufeinander gefügt, nachdem ggfls. notwendige Bohrungen für zu bildende Kanäle oder Befestigungsbohrungen gemäß einem dreidimensionalen Schema in die einzelnen Plattenschichten gebohrt oder geschnitten wurden.

Will man den ganzen Block weiter vorspannen, wird eine mechanische Vorspannung dadurch erreicht, dass das Bauteil zum Schluss ganzumhüllend mit Carbonfasern eingepackt und in einem Temperprozess im Ofen gebacken wird. Der Stein wird bei diesem Vorgang durch Schrumpfen des Harzes im Volumen geschrumpft. Das ist deshalb möglich, weil sich die Kristallgrenzen im Stein reversibel verschieben lassen und somit die Porosität des Steins mit den winzigen Hohlräumen nutzen lassen, um den Steinblock im Volumen zu ändern. Die Hohlräume im Steingefüge bieten den Platz, den das Steinmaterial bei der erzwungenen Volumenänderung findet. Solche Bauteile können so vorgespannt werden, dass der Block nach außen hin keine Ausdehnung bei Temperaturanstieg erfährt.
Mit Hilfe des Einsatzes von schrumpfenden Epoxidharzen, Polyesterharzen, Harzen auf Phenol-, Polyimid-, Cyanatester-, Melamin-, Polyurethan- oder Silikonbasis, genannt Matrix, in Kombination mit beliebigen zugstabilen Trägermaterialien, wird eine gezielte Zug-Stabilisierung von Stein oder Keramik für Wärmebelastung möglich. Kennzeichnend ist hierbei, dass die dämpfenden Eigenschaften des Steins voll genutzt werden.
Durch geeignetes Tempern im Ofen kann die Vorspannung zusätzlich unterstützt und verstärkt werden.

Die Erfindung wird somit realisiert durch die Verwendung von möglichst druckbelastbarem Stein oder Keramik und einer Trägerschicht, die unter Hitzeeinwirkung mit Hilfe einer schrumpfenden Harz-Zwischenschicht aufgebracht wird und der Stein ggfls. zusätzlich durch mehrfaches Biegen verbunden mit jeweiligem weiteren zugstabilisierenden Beschichten weiter vorgespannt, gelocht und anschließend die einzelnen Plattenschichten mit Harz verbunden werden. Das ganze wird anschließend im Ofen getempert, auch, um das Bauteil auf die späteren thermischen Belastungen vorzubereiten. In einfachen Bauformen kann das Material zum Beispiel als Treppenstufen dienen, mit 3 oder mehr Schichtenaufbau. Ein Zweischichtenaufbau kann als Hauswand dienen und ein Vielschichtenaufbau zum Beispiel die Basis für den Bau eines Motorblocks bilden. Es wird mit dieser Erfindung auch möglich im Sinne der Vermeidung innerer Risse verwindungsresistentes Plattenmaterial herzustellen, welches im Haus- und Gebäudebau, im Automobilbau, Schiffsbau und Flugzeugbau eingesetzt werden kann.

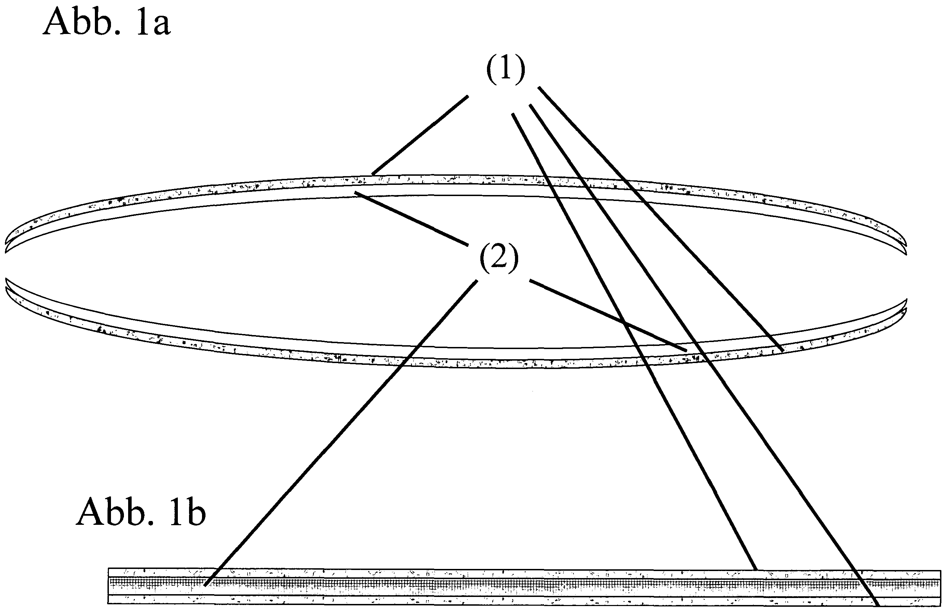

Eine der vielen möglichen Ausführungen der Erfindung beschreibt zwei rechteckigen Platten aus Stein (1), bestehend aus Naturstein, die erst einseitig vorgespannt beschichtet (Abb. 1a), nach Zusammenfügen (Abb. 1b) in der Mittelschicht mit einer Pflanzenfaser-, Basaltfaser- oder Carbonfasermatrix oder Metallfolie (2) stabilisiert sind. Die Verbindung zwischen Stein und Faser wird durch ein schrumpfendes Harz hergestellt, welches in die Steinoberfläche eindringt.
Die Verbindung der beiden vorgespannten Platten erfolgt z. B. mit dem gleichen Harz. Nach Aushärtung des Harzes ist das Gesamtgefüge zwar eben, aber durch die beschichteten Steinseiten in der Mittelschicht vorgespannt. Diese Vorspannung wirkt bis in die Oberfläche der Platte. Die Anordnung kann als verwindungsresistente und leichte Hauswand Verwendung finden, da das Verhältnis von Druckstabilität zum spezifischen Gewicht deutlich besser ist, als das von Beton.

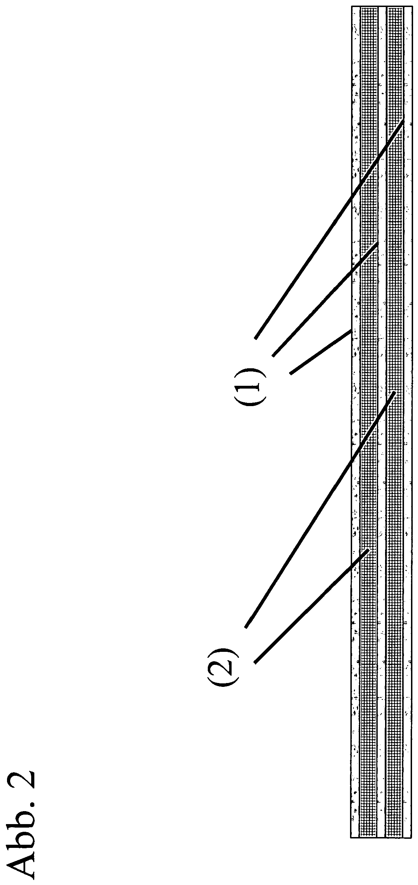

Abb. 2 zeigt eine zweite Ausführung der Erfindung mit drei rechteckigen dünnen Platten (1) aus Naturstein, die zusammengefügt in den beiden Mittelschichten mit einer zugstabilen Schicht aus faserhaltiger Matrix oder einer gelochten Metallfolie (2) beschichtet und nach Zusammenfügen mit einem geeigneten Harz in einen vorgespannten Zustand versetzt sind.. Der Aufbau eignet sich als Grundmaterial von dünnen und leichten verwindungsresistenten Treppenstufen.

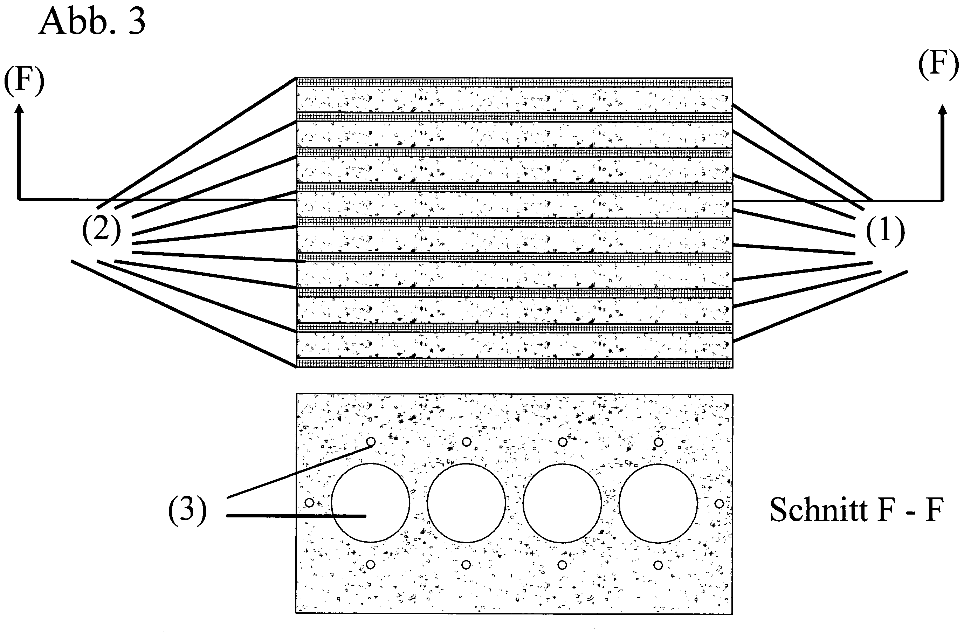

Abb. 3 zeigt mehrere Natursteinplatten (1), die mit einer zugstabilen Fasermatrix (2) unter Vorspannung beschichtet, mit Bohrungen (3) versehen und mit temperaturstabilen Harzen zusammengefügt sind. Nach Aushärtung der Matrix ist und bleibt der Stein intern vorgespannt. Die Bohrungen (3) dienen in einem Motorblock zum Beispiel als Zylinderbohrung und als Zirkulationskanäle für Luft und Kühlwasser.

## Patentansprüche

1. Anordnung mit zwei oder mehr Platten aus Naturstein, Kunststein, Beton, Keramik, gebranntem Steingut, glashaltigem Material, Glas, Korallenbaustoff, Perlmut, auf Basis von verflüssigtem Stein oder Magma hergestelltem Steingut - im folgenden Steingut genannt - welche großflächig einseitig oder beidseits oder vollständig umhüllend mit Hilfe von Harzen mit einem hinreichend zugstabilen Trägermaterial, im folgenden Träger genannt, beschichtet sind,
**gekennzeichnet dadurch, dass** einerseits der Träger aus Fasermaterial, Gewebe, Holz oder Metall besteht, andererseits das Steingut von volumenkomprimierbarer Art ist, wobei durch die Art und Weise der Beschichtung durch Harz und Träger eine Vorspannung des Steinguts dadurch entsteht, dass entweder ein während des Aushärtens schrumpfendes Harz als Verbindungselement von Steingut und Träger Verwendung findet, welches das volumenkomprimierbare Steingut durch das Schrumpfen des Harzes beim Aushärten vorspannt oder dadurch, dass das Steingut während des Aushärtens eines beliebigen Harzes durch mechanischen Zwang vorgebogen wird und nach Aushärtung des jeweiligen Harzes als Verbindungselement von Steingut und Träger die Vorbiegung des Steinguts dauerhaft als inhärente Vorspannung fixiert ist und wobei zwei oder mehrere solcher einseitig oder beidseitig trägermaterial-vorgespannten Steingutplatten entweder eben oder gekrümmt kraftschlüssig aufeinander gebracht werden, um auf diese Weise ein mechanisch und thermisch stabiles Blockmaterial zu bilden.

2. Anordnung nach Anspruch 1, **dadurch gekennzeichnet, dass** die Matrix des Steinträgers eine Epoxidharz-, Polyesterharz-, Phenolharz-, Polyimidharz-, Cyanatesterharz-, Melaminharz-, Polyurethanharz- oder Silikonharzbasis, eine thermoplastische Harzbasis hat oder aus einem beim Aushärten schrumpfenden Harz besteht

3. Anordnung nach Anspruch 1 und 2, **dadurch gekennzeichnet, dass** der Steinträger aus Fasermaterial, Gewebe, Holz oder Metall besteht.

4. Anordnung nach Anspruch 1, 2 und 3, **dadurch gekennzeichnet, dass** der Träger ein Gemisch unterschiedlicher Fasermaterialien und/oder Metallfolien in einer Schicht enthält oder aus mehreren Schichten mit jeweils unterschiedlichen Fasermaterialien und/oder Metallfolien besteht.

5. Anordnung nach Anspruch 1 bis 4, **dadurch gekennzeichnet, dass** der Träger mit Hilfe eines den Schrumpfprozess des Harzes verstärkenden Temperprozesses aufgebracht wird.

6. Anordnung nach Anspruch 1 bis 5, **dadurch gekennzeichnet, dass** das Material des Trägers aus Carbonfasern, Aramidfasern, Steinfasern, Basaltfasern, Pflanzenfasern, Glasfasern, carbonisierten Pflanzenfasern, zugstabilen Geweben oder Metallfolien oder einem Gemisch dieser Schichten in unterschiedlicher Reihenfolge besteht.

7. Anordnung nach Anspruch 1 bis 6, **dadurch gekennzeichnet, dass** der in Anspruch 1 beschriebene Träger einen ähnlichen Ausdehnungskoeffizienten besitzt, wie das zu tragende Steingut.

8. Anordnung nach Anspruch 1 bis 7, **dadurch gekennzeichnet, dass** der in Anspruch 1 beschriebene Träger einen annähernd gleichen Ausdehnungskoeffizienten besitzt, wie das zu tragende Steingut.

9. Anordnung nach Anspruch 1 bis 7, **dadurch gekennzeichnet, dass** der in Anspruch 1 beschriebene Träger einen gleichen Ausdehnungskoeffizienten besitzt, wie das zu tragende Steingut.

10. Anordnung nach Anspruch 1 bis 7, **dadurch gekennzeichnet, dass** der in Anspruch 1 beschriebene Träger einen kleineren Ausdehnungskoeffizienten besitzt, wie das zu tragende Steingut.

11. Anordnung nach Anspruch 1 bis 10, **dadurch gekennzeichnet, dass** das Block-Material mit entsprechend vorgefertigten Bohrungen zum Einsatz als Basis für einen Motorblock kommt.

12. Anordnung nach Anspruch 1 bis 11, **dadurch gekennzeichnet, dass** das Blockmaterial mit drei oder vier Stein-Schichten als Platte zum Bau von verwindungsresistenten Treppenstufen, Wandmaterial im Schiffsbau oder Flugzeugbau und als einfache Küchenarbeitsplatte Verwendung findet.

13. Anordnung nach Anspruch 1 bis 11, **dadurch gekennzeichnet, dass** das Blockmaterial mit zwei oder drei Stein-Schichten als Platte zum Bau von Haus-Wandmaterial - auch als selbsttragendes Element - Verwendung findet.

14. Anordnung nach Anspruch 1 bis 18, **dadurch gekennzeichnet, dass** das Baumaterial zusätzlich durch eine weitere Schicht in Form einer Eierkastengeometrie oder anderen Sandwicheinlage, wie z.B. Bienenwabenformen, oder Blähglas, stabilisiert wird und/oder mit einer weiteren wärmeisolierenden Schicht versehen wird.

15. Anordnung nach Anspruch 1 bis 14, **dadurch gekennzeichnet, dass** das Bauteil bezüglich der Mischung von Fasertyp, deren Orientierung und Matrix so eingestellt wird, dass sich gezielt sowohl ein positiver oder negativer Gesamt-Ausdehnungskoeffizient einstellt.

16. Anordnung nach Anspruch 1 bis 15, **dadurch gekennzeichnet, dass** der Ausdehnungskoeffizient der Träger, der innerhalb der Steinplatten unter Vorspannung steht, in Abhängigkeit von Dicke und Material des Steinguts so negativ eingestellt ist, daß der Block an seinen Außengrenzen keine Volumen - Ausdehnung nach außen hin besitzt.

17. Anordnung nach einem der Ansprüche 1 bis 16, **dadurch gekennzeichnet, dass** mindestens eine der Träger-Schichten eine Metallschicht ist, die gelocht ist, damit die Ausdehnung der Metall-Materials nach innen erfolgen kann.

18. Anordnung nach einem der Ansprüche 1 bis 17, **dadurch gekennzeichnet, dass** die einzelnen Schichten bestehend aus Steingut und Träger-Schicht jede für sich eine durch Rückbiegen erreichte Vorspannung haben, die dann eben oder weniger gebogen aufeinandergesetzt eine im Block eingebaute Gesamt-Vorspannung erzeugen.

## Claims

1. Arrangement with two or more plates of natural stone, artificial stone, concrete, ceramics, burned earthenware, glass containing material, glass, coral building material, mother-of-pearl, on the basis of liquefied stone or magma produced earthenware - hereinafter referred to earthenware - which large area coating on one side or both sides or completely wrapping with the aid of resins with a sufficiently tension-stable support material, hereinafter called support,
**characterized in that** on the one hand the support consists of fiber material, fabric, wood or metal, and on the other hand, the earthenware is of volume-compressible type, wherein by the way of coating by resin and support a preload of the earthenware is created by either a during curing shrinking resin being used as a fastener of earthenware and support, which preloads the volume-compressible earthenware by the shrinkage of the resin during curing or preloaded by the fact, that the stoneware is prebent during the curing of any resin by mechanical force and after curing of the respective resin as a fastener of earthenware and support the pre-bent earthenware is permanently fixed with an inherent preload and whereas two or more such unilaterally or bilaterally support material-preloaded earthenware are brought either flat or curved on top of each other, in order to form by this way a mechanically and thermally stable block material.

2. Arrangement according to claim 1, **characterized in that** the matrix of the stone support consists of an epoxy resin, polyester resin, phenolic resin, polyimide resin, cyanate ester resin, melamine resin, polyurethane resin or silicone resin base, a thermoplastic resin base or consists of a resin which is shrinking during hardening.

3. Arrangement according to claim 1 and 2, **characterized in that** the stone support consists of fiber material, fabric, wood or metal.

4. Arrangement according to claim 1, 2 and 3, **characterized in that** the support contains a mixture of different fiber materials and / or metal foils in one layer or consists of several layers, each with different fiber materials and / or metal foils.

5. Arrangement according to claim 1 to 4, **characterized in that** the support is applied by means of a thermal process application, reinforcing the shrinking of the resin.

6. Arrangement according to claim 1 to 5, **characterized in that** the material of the support consists of carbon fibers, aramid fibers, stone fibers, basalt fibers, vegetable fibers, glass fibers, carbonized plant fibers, tension-resistant fabrics or metal foils or a mixture of these layers in a different order.

7. Arrangement according to claim 1 to 6, **characterized in that** the support described in claim 1 has a similar coefficient of expansion, as the earthenware to be supported.

8. Arrangement according to claim 1 to 7, **characterized in that** the support described in claim 1 has an approximately equal expansion coefficient, as the earthenware to be supported.

9. Arrangement according to claim 1 to 7, **characterized in that** the support described in claim 1 has a same coefficient of expansion, as the earthenware to be supported.

10. Arrangement according to claim 1 to 7, **characterized in that** the support described in claim 1 has a smaller coefficient of expansion, such as the earthenware to be supported.

11. Arrangement according to claim 1 to 10, **characterized in that** the block material comes with appropriately prefabricated holes for use as the basis for an engine block.

12. Arrangement according to claim 1 to 11, **characterized in that** the block material with three or four stone layers is used as a plate for the construction of torsion-resistant stairs, wall material in shipbuilding or aircraft construction and as a simple kitchen worktop.

13. Arrangement according to claim 1 to 11, **characterized in that** the block material with two or three stone layers is used as a plate for the construction of house-wall material - as well as self-supporting element.

14. Arrangement according to claim 1 to 18, **characterized in that** the building material is additionally stablized by another layer in the form of an egg box geometry or other sandwich insert, such as Honeycomb forms, or expanded glass and / or provided with a further heat-insulating layer.

15. Arrangement according to claim 1 to 14, **characterized in that** the building element is setup with respect to the mixture of fiber type, its orientation and matrix in such a way, that selectively adjusts both a positive or negative total expansion coefficient.

16. Arrangement according to claim 1 to 15, **characterized in that** the coefficient of expansion of the support, which is preloaded within the stone slabs, is being set so negative, in dependance on the thickness and material of the earthenware, that the block at its outer boundaries shows no volume - expansion.

17. Arrangement according to one of claims 1 to 16, **characterized in that** at least one of the support layers is a metal layer which is perforated, so that the expansion of the metal material can happen to the inside.

18. Arrangement according to one of claims 1 to 17, **characterized in that** the individual layers, consisting of stoneware and support layer, each have an individual preload reached by back-bending, and produce, being layered even or less bended on top of each other, a total preload built into the block.

## Revendications

1. Dispositif de deux ou plusieurs plaques de pierre naturelle, de la pierre artificielle, du béton, de la céramique, de la terre cuite, de la matière contenant du verre, du verre, des matériaux de construction corail, du nacre, du material pierre produite du roche liquéfié ou du magma - ci-après dénommé faïence - qui est revêtu sur une grande partie de la surface sur un côté ou sur les deux côtés ou envelopée complètement à l'aide de résines avec un matériel support suffisamment stable en traction, ci-après appelé support,
**caractérisé en ce que** d'une part le support se compose des matériaux fibreux, tissu, bois ou métal, et d'autre part le faïence possède la capabilité d'etre compressible en volume, **en ce que** la facon de la revêtement de la faïence par la resine et le support resulte dans une précontrainte de la faïence, qui est causée soit par une resine qui se contracte pendant le durcissement de la resine, soit **en ce que** la faïence est préalablement plié par contrainte mécanique pendant le durcissement d'une n'importe quelle résine, et après durcissement de la résine comme élément de liaison de la faïence et le support, ce pré-cintrage de la faïence est fixée de manière permanente avec une distorsion inhérente dans le faïence, et dans lequel deux ou plusieurs de ces plaques de faïence précontraint par le support, d'un ou des deux côtés, sont fixer plan ou incurvée l'un sur l'autre, pour former un matériau de bloc stable mécaniquement et thermiquement.

2. Dispositif selon la revendication 1, **caractérisé en ce que** la matrice du support de pierre consiste d'une résine époxy ou une résine de polyester, une résine phénolique, une résine de polyimide, Cyanatesterharz-, une résine mélamine, une résine de polyuréthane ou à base de résine silicone ou une résine thermoplastique ou d'une résine se contractant pendant le durcissement.

3. Dispositif selon la revendication 1 et 2, **caractérisé en ce que** le support de pierre est constitué de matériau fibreux, de tissu, de bois ou de métal.

4. Dispositif selon la revendication 1, 2 ou 3, **caractérisé en ce que** le support contient un mélange de différents matériaux fibreux et / ou des feuilles métalliques dans une couche ou est constitué de plusieurs couches, **en ce que** chacune est constitue des matériaux fibreux et / ou des feuilles métalliques.

5. Dispositif selon la revendication 1 à 4, **caractérisé en ce que** le support est appliqué au moyen d'un processus de renforcement de la rétraction de la résine par temperature.

6. Dispositif selon la revendication 1 à 5, **caractérisé en ce que** le matériau du support consiste des fibre de carbone, des fibres d'aramide, des fibres de roche, des fibres de basalte, des fibres végétales, des fibres de verre, les fibres végétales carbonisées, les tissus tissés tension ou des feuilles métalliques, ou d'un mélange de ces couches dans un ordre différent.

7. Dispositif selon les revendications 1 à 6, **caractérisé en ce que** le support décrit à la revendication 1 a un coefficient de dilatation similaire à celui de la faïence à supporter.

8. Dispositif selon la revendication 1 à 7, **caractérisé en ce que** le support décrit à la revendication 1 a un coefficient de dilatation à peu près égal, comme la faïence à supporter.

9. Dispositif selon la revendication 1 à 7, **caractérisé en ce que** le support décrit à la revendication 1 a un même coefficient de dilatation, que la faïence à supporter.

10. Dispositif selon la revendication 1 à 7, **caractérisé en ce que** le support décrit à la revendication 1 présente un coefficient de dilatation plus petit, tel que la Steingut à supporter.

11. Dispositif selon les revendications 1 à 10, **caractérisé en ce que** le matériau de bloc est muni de trous préfabriqués de manière appropriée pour servir de base à un bloc moteur.

12. Dispositif selon la revendication 1 à 11, **caractérisé en ce que** le matériau de bloc avec trois ou quatre couches de pierre sert comme un matériau pour la construction des marches de l'escaliers, des mur dans la construction navale ou la construction aéronautique et un simple plan de travail de cuisine.

13. Dispositif selon la revendication 1 à 11, **caractérisé en ce que** le matériau de bloc avec deux ou trois couches de pierre sert comme plaque pour la construction de matériaux de mur de la maison - également appelé élément autoportant.

14. Dispositif selon les revendications 1 à 18, **caractérisé en ce que** le matériau de construction additionnellement sont stabilisées par une autre couche sous la forme d'une géométrie de boîte à oeufs ou autre insert sandwich, tel les formes en nid d'abeilles, ou verre expansé, et / ou munies d'une autre couche d'isolation thermique.

15. Dispositif selon la revendication 1 à 14, **caractérisé en ce que** le composant par rapport au mélange de type de fibres, de son orientation et de la matrice est réglée de telle sorte que de manière sélective soit un des ensembles de coefficients d'extension totaux positifs ou négatifs.

16. Agencement selon la revendication 1 à 15, **caractérisé en ce que** le coefficient de dilatation du support, qui est sollicité avec précontrainte entre les dalles de pierre, est fixé de façon négative en fonction de l'épaisseur et du matériau de la Steingut, que le bloc n'a pas de expansion de volume à l'extérieur.

17. Agencement selon l'une des revendications 1 à 16, **caractérisé en ce qu'**au moins l'une des couches support est une couche métallique qui est perforée, de sorte que l'expansion du matériau métallique peut se faire à l'intérieur.

18. Arrangement selon l'une des revendications 1 à 17, **caractérisé en ce que** les couches individuelles constituées de faïence et de couche support ont chacune une précontrainte par re-plier et sont plans ou moins pliées fixer l'un sur lautere d'une manière que le bloc a une précontrainte totale intégré dans le bloc.
